# NEUE EUROPÄISCHE PATENTSCHRIFT

(11) **EP 1 169 369 B2**
(45) Veröffentlichungstag und Bekanntmachung des Hinweises auf die Entscheidung über den Einspruch: **17.05.2006**
(45) Hinweis auf die Patenterteilung: 15.10.2003
(21) Anmeldenummer: 00918820.2
(22) Anmeldetag: 21.03.2000
(51) Int. Cl.: C08G 18/08, C08G 18/80, C03C 25/32

(54) **SELBSTVERNETZENDE POLYURETHAN-, POLYURETHAN-POLYHARNSTOFF- BZW. POLYHARNSTOFF-DISPERSIONEN FÜR SCHLICHTEN**
SELF-CROSSLINKING POLYURETHANE, POLYURETHANE POLYUREA OR POLYUREA DISPERSIONS FOR SIZING AGENTS
DISPERSIONS DE POLYURETHANE, DE POLYUREE DE POLYURETHANE ET DE POLYUREE AUTO-RETICULANTES POUR PRODUITS D'ENSIMAGE

(30) Priorität: 01.04.1999 DE 19914882
(43) Veröffentlichungstag der Anmeldung: 09.01.2002
(73) Patentinhaber: Bayer Aktiengesellschaft, 51368 Leverkusen (DE)
(72) Erfinder: BLUM, Harald, D-51375 Leverkusen (DE); NAUJOKS, Karin, D-51399 Burscheid (DE); KÖNIG, Eberhard, D-51375 Leverkusen (DE)
(86) Internationale Anmeldenummer: PCT/EP2000/002486
(87) Internationale Veröffentlichungsnummer: WO 2000/059973

(56) Entgegenhaltungen:
- EP-A- 0 784 097
- EP-A- 0 792 900
- EP-A- 0 959 085
- WO-A-93/24550
- DE-A- 2 553 839
- DE-A- 3 641 494
- DE-A- 4 142 734
- US-A- 5 563 208

## Beschreibung

Die Erfindung betrifft selbstvemetzende Polyurethan-, Polyurethan-Polyharnstoff- oder Polyharnstoff-Dispersionen, ein Verfahren zur Herstellung solcher Dispersionen und deren Verwendung.

Die Verwendung von Polyurethandispersionen z.B. zur Herstellung von Glasfaserschlichten ist z.B. aus der US-A 4 255 317 bekannt. Ebenfalls z.B. aus der EP-A 792 900 ist die Verwendung von Härterkomponenten auf Basis blockierter Polyisocyanate in Kombination mit Polyurethan-Dispersionen bekannt. Selbstvernetzende Dispersionen werden dort nicht beschrieben.

In der US-A 4 387 181 werden wässrige PU-Dispersionen mit Butanonoxim blockierten Isocyanatgruppen und eindispergiertem Diamin, z.B. Isophorondiamin, beschrieben, nicht aber die Verwendung dieser Dispersionen als Schlichte. Es wird vielmehr ein spezielles Herstellverfahren beschrieben, bei dem die Dispersion, die die blockierte Isocyanatgruppen enthält z.B. 12 Stunden bei 70°C durch Reaktion mit dem Diamin kettenverlängert wird. Dadurch entstehen hochmolekulare Dispersionen, bei denen keine nachträgliche Vernetzung mehr möglich ist. Die Dispersionen sind die für den Einsatz in Glasfaserschlichten weniger gut geeignet.

In der US-A 5 563 208 werden Lack-Dispersionen beschrieben, bei denen die Aushärtung mittels eines Polyamins auf dem Substrat vorgenommen wird. Hier werden relativ niedrig molekulare Prepolymere mit blockierten Isocyanatgruppen in annähernd trifunktioneller Bauweise beschrieben, was durch die Verwendung der beispielhaft eingesetzten Polyisocyanate wie Roh-MDI oder Isocyanuratgruppen haltige Lackpolyisocyanate auf Basis von 1,6-Diisocyanatohexan belegt wird. Auf die Eignung solcher Produkte für Schlichten wird nicht hingewiesen. Die Produkte sind aufgrund der hohen Verzweigung und der hohen Vernetzungsdichte für Schlichten ungeeignet, die Verstärkungseigenschaften sind unzureichend.

Die US-A 5 300 556 beschreibt ein Verfahren zur Herstellung von wässrigen Dispersionen welche blockierte Polyisocyanate und Polyhydroxylverbindungen enthalten. Dabei wird in wässriger Dispersion ein hydrophiles Polyisocyanat mit Blockierungsmittel in Gegenwart von Polyhydroxylverbindungen umgesetzt. Dabei ist es erforderlich, Blockierungsmittel einzusetzen, die eine höhere Reaktivität als Wasser und die Polyhydroxylverbindung aufweisen. Dies bedeutet eine erhebliche Einschränkung der Optimierungsmöglichkeiten und macht auch eine Umsetzung in den technischen Maßstab außerordentlich schwierig, da eine Isocyanat-Wasser-Reaktion nie ganz auszuschließen ist. Auf eine Eignung solcher Produkte für Schlichten wird ebenfalls nicht hingewiesen.

Überraschenderweise wurde jetzt gefunden, dass Glasfaserschlichten die spezielle selbstvernetzende Polyurethan-, Polyurethan-Polyharnstoff- oder Polyharnstoff-Dispersionen enthalten, eine deutlich verbesserte Verarbeitbarkeit damit geschlichteter Glasfasern und verbesserte mechanische Eigenschaften entsprechender glasfaserverstärkten Kunststoffe zeigen.

Unter selbstvernetzenden Dispersionen sind dabei solche Dispersionen zu verstehen, die Polyurethane, Polyurethan-Polyhamstoffe bzw. Polyharnstoffe mit blockierten Isocyanatgruppen und reaktive Hydroxyl- bzw. Aminogruppen im gleichen Polymer und/oder blockierte Isocyanatgruppen im Polymer und zusätzlich Diamine, Polyamine und/oder Hydroxyamine enthalten. Die Anwesenheit blockierter Isocyanat-gruppen und reaktiver Hydroxyl- bzw. Aminogruppen im gleichen Monomer führt überraschenderweise zu einem verbessertem Eigenschaftsniveau, was Verstärkungseigenschaften und Hydrolysebeständigkeit, sowie die Verarbeitungseigenschaften wie z.B. die Schüttdichte betrifft.

Es wurde weiterhin gefunden, das solche Dispersionen darüber hinaus einige weitere Vorteile für den Anwender bieten. Es entfällt der Aufwand für das getrennte Lagern von Dispersion und Härter, es werden Schwierigkeiten bzw. unzureichende Schlichteeigenschaften vermieden, die durch nicht exaktes Abmischen von Dispersion und Härter entstehen können. Es entstehen keine Verträglichkeitsprobleme, wie sie zwischen unterschiedlichen Dispersionen und Härtern entweder bereits beim Mischen, aber auch während der erhöhten Temperaturen bei der Applikation auftreten können.

Gegenstand der Erfindung sind also selbstvemetzende Dispersionen auf Basis von Polyurethanen, Polyurethan-Polyharnstoffen bzw. Polyharnstoffen, die an das Polymer gebundene blockierte Isocyanatgruppen und zusätzlich an das Polymer gebundene, reaktive Hydroxyl- bzw. Aminogruppen enthalten und die bei Raumtemperatur bis 50°C lagerstabil sind und bei 90 bis 280°C unter Vernetzung abreagieren, und die in dispergierter bzw. gelöster Form Umsetzungsprodukte aus
a) mindestens einer Polyolkomponente,
b) mindestens einer Di-, Tri- und/oder Polyisocyanatkomponente,
c) mindestens einer hydrophilen, nichtionischen bzw. (potentiell) ionischen Aufbaukomponente, bestehend aus Verbindungen mit mindestens einer gegenüber Isocyanatgruppen reaktiven Gruppe und mindestens einer hydrophilen Polyetherkette, wobei die Polyetherketten dieser Verbindungen zu 40 bis 95 % aus eingebauten Ethyleneinheiten und 5 bis 40 % eingebauten Propyleneinheiten bestehen und ein Molekulargewicht von 300 bis 6 000 aufweisen und aus Verbindungen mit mindestens einer, gegebenenfalls mindestens teilweise neutralisiert vorliegenden, zur Salzbildung fähigen Gruppe und mindestens einer gegenüber Isocyanatgruppen reaktiven Gruppe,
d) mindestens einer von a) bis c) verschiedenen Aufbaukomponente des Molekulargewichtsbereiches 32 bis 500 mit mindestens einer gegenüber Isocyanatgruppen reaktiven Gruppe und
e) mindestens eines monofunktionellen Blockierungsmittels,
sind, wobei c) in solcher Menge eingesetzt wird, dass eine stabile Dispersion entsteht, wobei entweder eine Komponente d) derart eingesetzt wird, dass die resultierende Dispersion neben blockierten Isocyanatgruppen reaktive, freie Hydroxyl- und/oder Aminogruppen enthält, wobei der Anteil an reaktiven Hydroxyl- bzw. Aminogruppen aus d) nicht 0 sein kann.

Im folgenden werden die erfindungsgemäßen Polyurethan-, Polyurethan-Polyharnstoff- bzw. Polyharnstoff-Dispersionen der Einfachheit halber auch als Polyurethan-Dispersionen bzw. als Dispersionen bezeichnet, dabei sind immer Polyurethan-, Polyurethan-Polyharnstoff- und Polyharnstoff-Dispersionen mit eingeschlossen. Die Bezeichnung Dispersionen schließt auch Dispersionen mit ein, die gelöste Polymeranteile enthalten. Der Anteil gelösterer Polymerer kann dabei z.B. durch den Gehalt hydrophilierender Komponenten beeinflusst werden.

Die erfindungsgemäßen Dispersionen auf Basis von Polyurethanen, Polyurethan-Polyharnstoffen bzw. Polyharnstoffen stellen vorzugsweise Umsetzungsprodukte dar von
a) 30 bis 90 Gew.-% mindestens einer Polyolkomponente des Hydroxylzahlbereiches 5 bis 350,
b) 10 bis 50 Gew.-% mindestens einer Di-, Tri- und/oder Polyisocyanatkomponente,
c) 1 bis 20 Gew.-% mindestens einer hydrophilen, nichtionischen bzw. (potentiell) ionischen Aufbaukomponente, bestehend aus Verbindungen mit mindestens einer gegenüber Isocyanatgruppen reaktiven Gruppe und mindestens einer, gegebenenfalls mindestens teilweise neutralisiert vorliegenden, zur Salzbildung fähigen Gruppe oder einer hydrophilen Polyetherkette,
d) 1 bis 20 Gew.-% mindestens einer von a) bis c) verschiedenen Aufbaukomponente des Molekulargewichtsbereiches 32 bis 500 mit mindestens einer gegenüber Isocyanatgruppen reaktiven Gruppe
e) 0,2 bis 7,5 Gew.-% mindestens eines monofunktionellen Blockierungsmittels,
wobei c) in solcher Menge eingesetzt wird, dass eine stabile Dispersion entsteht, wobei entweder eine Komponente d) derart eingesetzt wird, dass die resultierende Dispersion neben blockierten Isocyanatgruppen reaktive, freie Hydroxyl- und/oder Aminogruppen in Mengen von 0 bis 4 Gew.-% bezogen auf den Feststoffgehalt der Dispersion enthält, wobei der Anteil an reaktiven Hydroxyl- bzw. Aminogruppen aus d) nicht 0 sein kann.

Besonders bevorzugt sind erfindungsgemäße Dispersionen auf Basis von Polyurethanen, Polyurethan-Polyharnstoffen bzw. Polyharnstoffen die Umsetzungsprodukte darstellen von
a) 35 bis 75 Gew.-% mindestens einer Polyolkomponente des Hydroxylzahlbereiches 5 bis 350,
b) 15 bis 40 Gew.-% mindestens einer Diisocyanatkomponente,
c) 2,5 bis 15 Gew.-% einer hydrophilen, nichtionischen Verbindung mit mindestens einer gegenüber Isocyanatgruppen reaktiven Gruppe und einer hydrophilen Polyetherkette sowie einer weiteren (potentiell) anionischen Verbindung, mit einer, gegebenenfalls mindestens teilweise neutralisiert vorliegenden, zur Salzbildung fähigen Gruppe,
d) 1 bis 11 Gew.-% mindestens einer von a) bis c) verschiedenen Aufbaukomponenten des Molekulargewichtsbereiches 32 bis 500 mit mindestens einer gegenüber Isocyanatgruppen reaktiven Gruppe und
e) 0,2 bis 6 Gew.-% Blockierungsmittel,
wobei die Summe aus a) bis e) 100 % beträgt, wobei c)in solcher Menge eingesetzt wird, dass eine stabile Dispersion entsteht und wobei eine Komponente d) derart eingesetzt wird, dass die resultierende Dispersion neben blockierten Isocyanatgruppen reaktive, freie Hydroxyl- und/oder Aminogruppen in Mengen von 0 bis 2,5 Gew.-% bezogen auf den Feststoffgehalt der Dispersion enthält, wobei der Anteil an reaktiven Hydroxyl- bzw. Aminogruppen aus d) nicht 0 sein kann.

Gegenstand der Erfindung ist auch ein Verfahren zur Herstellung selbstvernetzender Dispersionen dadurch gekennzeichnet, dass aus mindestens einem Polyol a), mindestens einer Isocyanatkomponente b) gegebenenfalls unter Mitverwendung hydrophilierender Komponenten c) bzw. von Komponenten d) zunächst ein Isocyanat-funktionelles Prepolymer hergestellt wird, dann ein Teil der verbleibenden Isocyanat-gruppen mit mindestens einem Blockierungsmittel e) umgesetzt wird und dann die übrigen Isocyanatgruppen entweder vor, während oder nach dem Dispergieren gegebenenfalls mit hydrophilierenden Komponenten c) und/oder Komponenten d) umgesetzt werden, anschließend gegebenenfalls das vor, während oder nach der Prepolymerherstellung gegebenenfalls zugesetzte Lösemittel destillativ entfernt wird, wobei die hydrophilierende(n) Komponente(n) c) in solcher Menge eingesetzt werden, dass eine stabile Dispersion entsteht und wobei eine Komponente d) so eingesetzt wird, dass in der selbstvernetzenden Dispersion neben blockierten Isocyanatgruppen freie, reaktive Hydroxyl- und/oder Aminogruppen an das Polymer gebunden sind.

Gegenstand der Erfindung ist ein weiteres Verfahren zur Herstellung selbstvernetzender Dispersionen dadurch gekennzeichnet, dass aus mindestens einem Polyol a), mindestens einer Isocyanatkomponente b) gegebenenfalls unter Mitverwendung hydrophilierender Komponenten c) bzw. von Komponenten d) zunächst ein Isocyanat-funktionelles Prepolymer hergestellt wird, dann ein Teil der verbleibenden Isocyanatgruppen mit mindestens einem Blockierungsmittel e) umgesetzt wird und dann die übrigen Isocyanatgruppen entweder vor, während oder nach dem Dispergieren gegebenenfalls mit hydrophilierenden Komponenten c) und/oder Komponenten d) umgesetzt werden und wobei eine reaktive Komponente F) vor, während oder nach dem Dispergieren dann zugesetzt wird, wenn keine freien Isocyanatgruppen mehr vorhanden sind und anschließend das vor, während oder nach der Prepolymerherstellung gegebenenfalls zugesetzte Lösemittel destillativ entfernt wird, so dass in der selbstvernetzenden Dispersion neben blockierten Isocyanatgruppen gegebenenfalls freie, reaktive Hydroxyl- und/oder Aminogruppen an das Polymer gebunden sind und in Form von Diaminen, Polyaminen bzw. Hydroxyaminen reaktive Amino- und/oder Hydroxylgruppen enthalten sind.

Gegenstand der Erfindung ist auch die Verwendung von selbstvernetzenden Polyurethan-Dispersionen in oder als Schlichten, insbesondere für Glasfasern.

Zur Herstellung der erfindungsgemäßen Dispersionen geeignete Polyolkomponenten a) sind z.B. Polyesterpolyole (z.B. Ullmanns Enzyklopädie der technischen Chemie, 4. Auflage, Band 19, S. 62-65). Geeignete Rohstoffe zur Herstellung dieser Polyesterpolyole sind difunktionelle Alkohole wie Ethylenglykol, 1,2- und 1,3-Propylenglykol, 1,3-, 1,4-, 2,3-Butandiol, 1,6-Hexandiol, Neopentylglykol, Trimethylhexandiol, Triethylenglykol, hydrierte Bisphenole, Trimethylpentandiol, Diethylendiglykol, Dipropylendiglykol, 1,4-Cyclohexandiol, 1,4-Cyclo-hexandimethanol und difunktionelle Carbonsäuren bzw. deren Anhydride wie Adipinsäure, Phthalsäure-(anhydrid), Isophthalsäure, Maleinsäure(anhydrid), Terephtalsäure, Tetrahydrophthalsäure(anhydrid), Hexahydrophthalsäure(anhydrid), Bernsteinsäure(anhydrid), Fumarsäure, Azelainsäure, Dimerfettsäure. Ebenfalls geeignete Polyesterrohstoffe sind Monocarbonsäuren wie Benzoesäure, 2-Ethylhexansäure, Ölsäure, Sojaölfettsäure, Stearinfettsäure, Erdnussölfettsäure, Leinölfettsäure, Nonansäure, Cyclohexanmonocarbonsäure, Isononansäure, Sorbinsäure, Konjuenfettsäure, höherfunktionelle Carbonsäuren oder Alkohole wie Trimellithsäure(anhydrid), Butantetracarbonsäure, Trimerfettsäure, Trimethylolpropan, Glycerin, Pentaerythrit, Rizinusöl, Dipentaerythrit und andere nicht namentlich genannte Polyesterrohstoffe.

Ebenfalls geeignete Polyolkomponenten a) sind Polycarbonatdiole die z.B durch Umsetzung von Diphenyl- oder Dimethylcarbonat mit niedermolekularen Di- oder Triolen bzw. epsilon-Caprolacton-modifizierten Di- oder Triolen erhalten werden können.

Ebenfalls geeignet sind Polyesterdiole auf Lactonbasis, wobei es sich um Homo- oder Mischpolymerisate von Lactonen, bevorzugt um endständige Hydroxylgruppen aufweisende Anlagerungsprodukte von Lactonen wie z.B. epsilon-Caprolacton oder gamma-Butyrolacton an difunktionelle Startermoleküle handelt. Geeignete Startermoleküle können die oben genannten Diole, aber auch niedermolekulare Polyester- oder Polyetherdiole sein. Anstelle der Polymerisate von Lactonen können auch die entsprechenden Hydroxycarbonsäuren eingesetzt werden.

Ebenfalls geeignete Polyolkomponenten a) sind Polyetherpolyole. Sie sind insbesondere durch Polymerisation von Ethylenoxid, Propylenoxid, Tetrahydrofuran, Styroloxid und/oder Epichlorhydrin mit sich selbst, z.B. in Gegenwart von BF3 oder basischen Katalysatoren oder aber durch Anlagerung dieser Verbindungen gegebenenfalls auch im Gemisch oder nacheinander, an Starterkomponenten mit reaktionsfähigen Wasserstoffatomen, wie Alkohole, Amine, Aminoalkohole oder Wasser erhältlich.

Die genannten Polyolkomponenten a) können auch als Mischungen, gegebenfalls auch zusammen mit anderen Polyolen a) wie z.B. Polyesteramiden, Polyetherestern, Polyacrylaten, Polyolen auf Epoxidbasis eingesetzt werden.

Die Hydroxylzahl der Polyole a) liegt bei 5 bis 350, vorzugsweise bei 8 bis 200 mg KOH/g Substanz. Die Molekulargewichte der Polyole a) liegen zwischen 300 und 25000, vorzugsweise zwischen 300 und 15000, wobei in einer bevorzugten Ausführungsform zumindest teilweise Polyole a) mit einem Molekulargewicht von >9000 g/Mol eingesetzt werden.

Besonders bevorzugt werden als Komponente a) hydrolysestabile Polyole des Molekulargewichtes 300 bis 3500 auf Basis von Carbonatdiolen, Tetrahydrofurandiolen und/oder di- bzw. trifunktionellen Polyethern auf Propylenoxid- bzw. Propylenoxid/Ethylenoxidbasis eingesetzt, wobei bei Verwendung trifunktioneller Polyether diese höchstens in Mengen bis zu 8 Gew.-% bezogen auf den Gesamtfeststoffgehalt des Polymers eingesetzt werden.

In einer besonders bevorzugten Ausführungsform wird Komponente a) in Mengen von 37 bis 49 Gew.-% eingesetzt.

Der Gesamtanteil an tri- oder - weniger bevorzugt - höherfunktionellen Komponenten a) bis F) beträgt 0 bis 8, vorzugsweise 0 bis 5,5 Gew.-% bezogen auf den Gesamtfeststoffgehalt des Polymers.

Die Komponente b) besteht aus mindestens einem organischen Di-, Tri- oder Polyisocyanat des Molekulargewichtes 140 bis 1500, vorzugsweise 168 bis 262. Geeignet sind z.B. Hexamethylendiisocyanat (HDI), Isophorondiisocyanat (IPDI), 4,4'-Diisocyanatodicyclohexyl-methan (H12MDI), 1,4-Butandiisocyanat, Hexahydrodiisocyanatotoluol, Hexahydrodiisocyanatoxylol, Nonantriisocyanat. Prinzipiell geeignet, jedoch nicht bevorzugt sind aromatische Isocyanate wie 2,4- oder 2,6- Diisocyanatotoluol (TDI), Xylylendiisocyanat und 4,4'-Diisocyanatodiphenylmethan. Ebenfalls mitverwendet werden können an sich bekannte Polyisocyanate auf Basis der genannten und auch anderer Isocyanate mit Uretdion-, Biuret-, Allophanat-, Isocyanurat-, Iminoxadiazindion- oder Urethanstruktureinheiten, dies ist jedoch nicht bevorzugt.

Besonders bevorzugt ist die ausschließliche Verwendung von aliphatischen bzw. cycloaliphatischen difunktionellen Isocyanaten des Molekulargewichtes 168 bis 222, insbesondere von Isophorondiisocyanat und/oder Hexamethylendiisocyanat.

Die Komponente c) besteht aus mindestens einer (potentiell) ionischen Verbindung mit mindestens einer gegenüber Isocyanatgruppen reaktionsfähigen Gruppe und mindestens einen nichtionischen Verbindung mit hydrophilen Polyethergruppen und mindestens einer gegenüber Isocyanatgruppen reaktionsfähigen Gruppe. Bei den ionischen Verbindungen handelt es sich z.B um mindestens eine, vorzugsweise eine oder zwei Hydroxyl- und /oder primäre oder sekundäre Aminogruppen aufweisende Carbonsäure, Sulfonsäure und Phosphorsäure oder um deren Salze. Geeignete Säuren sind z.B. Hydroxypivalinsäure, Dimethylolessigsäure, 2,2'-Dimethylolpropionsäure, 2,2'-Dimethylolbuttersäure, Aminobenzoesäure, 2,2'-Dimethylolpentansäure, Additionsprodukte aus Acrylsäure und Diaminen wie z.B. Ethylendiamin oder Isophorondiamin. Ebenfalls geeignet ist die Verwendung von gegebenenfalls Ethergruppen aufweisenden Sulfonatdiolen der in US-A 4 108 814 beschrieben Art. Ebenfalls geeignet sind aminofunktionelle Sulphonate.

Ebenfalls geeignet, allerdings weniger bevorzugt sind (potentiell) kationische Verbindungen mit mindestens einer Hydroxyl- und/oder primären oder sekundären Aminogruppe und mindestens einer tertiären Aminogruppe, bzw. deren Salze mit Carbon-, Sulphon- oder Phosphorsäure.

Die freien Säure- bzw. Aminogruppen, insbesondere Carboxyl- und Sulfonsäuregruppen stellen die vorstehend genannten "potentiell ionischen bzw. anionischen" Gruppen dar, während es sich bei den durch Neutralisation mit Basen bzw. Säuren erhaltenen salzartigen Gruppen, insbesondere Carboxylatgruppen und Sulphonatgruppen um die vorstehend angesprochenen "ionischen bzw. anionischen" Gruppen handelt.

In besonders bevorzugten Ausführungsformen bestehen anionische Komponenten c) aus Sulphonatgruppen enthaltenden Verbindungen oder aus dem Additionsprodukt aus äquivalenten Mengen Acrylsäure und Isophorondiamin.

Durch die cycloaliphatische Gruppe dieses Carboxylat-Hydrophilierungsmittels werden eine günstige Verträglichkeit, eine reduzierte Kristallisationsneigung des Polymeren und verbesserte Applikationseigenschaften erhalten. Die Sulphonatgruppen verbessern ebenfalls die Verträglichkeit mit anderen Bindemittelkomponenten, und wirken positiv auf die Hydrolsebeständigkeit und verbessern insgesamt die Stabilität der Schlichten.

Nichtionisch hydrophile Verbindungen c) sind zwingend enthalten und weisen pro Molekül eine oder zwei gegenüber Isocyanatgruppen reaktionsfähige Gruppen auf, insbesondere Hydroxyl- und/oder primäre oder sekundäre Aminogruppen sowie mindestens eine hydrophile Polyetherkette. Die Polyetherketten dieser Verbindungen bestehen zu 30 % bis 100 % aus eingebauten Ethylenoxideinheiten, wobei in einer bevorzugten Ausführungsform 40 bis 95 % eingebaute Ethylenoxideinheiten neben 5 bis 60 % eingebauten Propylenoxideinheiten vorliegen. Geeignete derartige Komponenten c) weisen Molekulargewichte von 300 bis 6000 auf und sind z.B. monofunktionelle Polyethylen-/propylenglykolmonoalkylether wie Breox® 350, 550, 750 von BP Chemicals, Polyether LB® 25, LB® 30, LB® 34, LB® 40 von Bayer AG, Polyethylen-/propylenglykole wie Carbowax® 300, 400, 1000, 2000, 6000 von Union Carbide, di- oder monofunktionelle Polyetheramine wie Jeffamine® ED600, ED900, ED4000, M715, M1000, M2070 von Texaco.

Bevorzugt werden nichtionische monofunktionelle Komponenten c) des Molekulargewichts 1000 bis 2500 mit einem Gehalt an eingebautem Propylenoxid von 10 bis 57 % und einem Gehalt an eingebautem Ethylenoxid von 90 bis 43 % eingesetzt.

Besonders bevorzugt wird eine gemischte Hydrophilierung aus nichtionischen hydrophilen Komponenten c) in Mengen von 2 bis 8 Gew.-%, wobei der Ethylenoxidgehalt dabei nicht mehr als 4,5 Gew.-% beträgt und anionischen Komponenten c) mit Sulphonatgruppen oder Carboxylatgruppen aus dem Umsetzungsprodukt von Isophorondiamin und Acrylsäure in Mengen von 0,5 bis 7 Gew.-% eingesetzt. Diese führt zu Schlichten mit ausgezeichneter Stabilität, sehr guten Haftungseigenschaften und guten Verstärkungseigenschaften.

Bei der Komponente d) handelt es sich um mindestens eine, vorzugsweise um mindestens zwei von a), b) und c) verschiedene mono-, di- oder polyfunktionelle Verbindungen des Molekulargewichtes 32 bis 500 mit primären bzw. sekundären Amino- und/oder Hydroxygruppen. Geeignet sind z.B. Ethylendiamin, Diethylentriamin, Isophorondiamin, Hexamethylendiamin, 4,4-Diaminodicyclohexylmethan, Hydroxyethylethylendiamin, Etanolamin, Diethanolamin, Isopropanolamin, Diisopropanolamin, N-Methylethanolamin, Aminomethylpropanol, Hydrazin(hydrat), Propylendiamin, Dimethylethylendiamin, Ethylenglykol, 1,2-, 1,3-Propylenglykol, 1,4-Butandiol, Neopentylglykol, 1,6-Hexandiol, Trimethylpentandiol, Trimethylolpropan, Glycerin, Hydroxyethylacrylat, Hydroxyethylmethacrylat, Hydroxypropylacrylat, Hydroxypropylmethacrylat, 3-Amino-propyltriethoxysilan, 3-Aminopropytrimethoxysilan, 3-Aminopropyltributoxysilan, Aminoethylaminopropyltrimethoxysilan, Umsetzungsprodukte aus Maleinsäuredimethylester, Maleinsäurediethylester und/oder Maleinsäuredibutylester mit den vorstehend genannten Aminoalkoxysilanen, Umsetzungsprodukt aus (Meth)acrylsäure und dem Glycidester der Versaticsäure (Cardura E10, Shell), Umsetzungsprodukt aus 2 Mol Propylencarbonat und 1 Mol Hydrazin, Adipinsäuredihydrazid und/oder Mischungen der genannten, gegebenenfalls auch mit weiteren Komponenten d). Die Komponenten d) werden bevorzugt in Mengen von 2 bis 8,5 Gew.-% eingesetzt.

Durch geeignete Auswahl der Komponente d) können der Molekuargewichtsaufbau durch Kettenverlängerung, Kettenverzweigung und/oder Kettenabbruch beeinflusst und/oder funktionelle Gruppen eingeführt werden. Werden Komponenten e) zur Herstellung des Prepolymeren eingesetzt, werden vorzugsweise hydroxyfunktionelle Komponenten d) der genannten Art eingesetzt. Werden Komponenten d) zur Kettenverlängerung des Prepolymeren in organischer Lösung oder in wässriger Dispersion eingesetzt, werden vorzugsweise di- und/oder trifunktionelle aminische Komponenten d) eingesetzt.

In einer besonders bevorzugten Ausführungsform wird als Kettenverlängerungsmittel 0,1 bis 1,2 Gew.-% Hydrazin, bzw. eine äquivalente Menge Hydrazinhydrat eingesetzt.

Für Kettenabbruchreaktionen werden vorzugsweise monoaminofunktionelle Alkoxysilane wie z.B. 3-Aminopropyltriethoxysilan oder 3-Aminopropyltrimethoxysilan, bevorzugt in Mengen von 0,5 bis 3 Gew.-% eingesetzt.

Durch geeignete Auswahl der Komponente d) kann der Gehalt an freien, für die Vernetzung zur Verfügung stehenden Hydroxyl- und/oder Aminogruppen eingestellt werden.

Dazu werden z.B Aminoalkohole, besonders bevorzugt Diethanolamin, Diisopropanolamin, Ethanolamin und/oder Hydroxyethylethylendiamin, aber auch Diamine wie z.B. Isophorondiamin, eingesetzt. Bevorzugt wird die Menge (der Überschuss) der Komponente d) so gewählt, das nur Aminogruppen ganz oder teilweise mit Isocyanatgruppen zur Reaktion gebracht werden, und überschüssige Aminogruppen bzw. vorzugsweise überschüssige Hydroxylgruppen nach Abschluss der Reaktion übrig bleiben.

Geeignete monofunktionelle Blockierungsmittel e) können z.B. sein: Butanonoxim, Cyclohexanonoxim, Acetonoxim, Malonester, Triazol, ε-Caprolactam, Phenol, Dimethylpyrazol, monofunktionelle Amine wie z.B.Di-butylamin, Di-isopropylamin, monofunktionelle Alkohole wie z.B. Butanol, Cyclohexanol, Isopropanol, tert.-Butanol. Es können auch Mischungen verschiedener Blockierungsmittel eingesetzt werden, insbesondere Mischungen von Blockierungsmitteln, die bei unterschiedlichen Temperaturen deblockieren und so eine bevorzugte Ausführungsform, eine stufenweise Reaktion ermöglichen.

Bevorzugte Blockierungsmittel sind Butanonoxim, ε-Caprolacton, Dimethylpyrazol sowie Alkohole bzw Mischungen dieser Blockierungsmittel.

Die Dispersionen können zusätzlich bis 10, vorzugsweise bis 6 Gew.-% einer reaktiven Komponente F) enthalten. Diese Komponente kann bei der Herstellung der erfindungsgemäßen Produkte jederzeit zugesetzt werden, allerdings erst dann, wenn keine freien NCO-Gruppen mehr vorhanden sind. Geeignete Komponenten F) können z.B. mindestens difunktionelle Amine, Polyamine bzw. Aminoalkohole sein. Vorzugsweise werden lineare aliphatische bzw. besonders bevorzugt cycloaliphatische Diamine eingesetzt. Möglich Komponenten F) sind Hexamethylendiamin, Isophorondiamin, Dimethylethylendiamin, 1,4-Cyclohexandiamin, Trimethylhexandiamin, Dimethylhexandiamin, Jeffamine® (Texaco) wie z.B. 3,3'-[1,4-Butandiyl-bis(oxy)]bis-1-propanamin, 4,4'-Methylen-bis-(2,6-diethylcyclohexanamin), 4,4'-Methylen-bis-(2-methylcyclohexanamin), 4,4'-Methylen-bis-cyclohexanamin, TCD-Diamin. Das Molekulargewicht der Komponente F liegt bei 60 bis 1000, vorzugsweise bei 89 bis 500.

In einer bevorzugten Ausführungsform enthalten die erfindungsgemäßen Dispersionen neben blockierten Isocyanatgruppen 1 bis 6 Gew.-% aminofunktionelle Komponenten F) als reaktive Gruppen tragende Komponente.

In einer weiteren bevorzugten Ausführungsform enthalten die erfindungsgemäßen Dispersionen neben blockierten Isocyanatgruppen ausschließlich ins Polymer eingebaute Hydroxylgruppen als reaktive Gruppen.

In einer weiteren bevorzugten Ausführungsform enthalten die erfindungsgemäßen Dispersionen neben blockierten Isocyanatgruppen sowohl aminofunktionelle Komponenten F) als auch ins Polymer eingebaute Hydroxylgruppen als reaktive Gruppen bzw. reaktive Gruppen tragende Komponenten.

In einer weiteren bevorzugten Ausführungsform enthalten die erfindungsgemäßen Dispersionen verschieden blockierte Isocyanatgruppen, wobei die Isocyanatgruppen bei unterschiedlichen Temperaturen deblockieren und so einmal zu einem guten Verbund von Glasfaser zur Schlichte und im zweiten Schritt für einen guten Verbund Schlichte zu Kunststoff beitragen.

Eine solche mögliche Kombination ist die Verwendung von 20 bis 80 Gew.-% Butanonoxim bzw. Dimethylpyrazol zusammen mit 80 bis 20 Gew.-% ε-Caprolactam oder mono-funktionellen Alkoholen, wobei die %-Angaben auf die Gesamtmenge Blockierungsmittel e) bezogen sind.

Das Verhältnis von blockierten NCO-Gruppen zu freien, reaktiven Hydroxyl- und/oder Aminogruppen aus Komponente d) und/oder Komponente F) in den erfindungsgemäßen Dispersionen beträgt 1,00 : 0,25 bis 1,00 : 1,35, vorzugsweise 1,00 : 0,35 bis 1,00 : 0,85 und ganz besonders bevorzugt 1,00 : 0,42 bis 1,00 : 0,58.

Die erfindungsgemäßen selbstvernetzenden Dispersionen zeigen bei Raumtemperatur bis zu 50°C eine praxisgerechte Lagerstabilität. Nach der Applikation erfolgt eine Vernetzung bei Temperaturen von 80 bis 280°C, vorzugsweise bei 110 bis 220°C. Die erforderlich Zeit für die Vemetzungsreaktion kann zwischen 20 Sekunden und 45 Minuten, vorzugsweise bei 1 bis 20 Minuten liegen.

Die Umsetzung der Komponenten a) und b), gegebenenfalls unter Mitverwendung von c) und/oder einer hydroxyfunktionellen Komponente d) kann ein- oder mehrstufig erfolgen. Die Reaktion kann in Substanz oder in organischen Lösemitteln, dann vorzugsweise in Aceton, durchgeführt werden. Dabei wird das Äquivalentverhältnis der OH-funktionellen Komponenten a) und gegebenenfalls c) und/oder d) zur NCO-funktionellen Komponente b) so gewählt, dass ein NCO-Überschuss von 20 bis 200, vorzugsweise von 30 bis 150 % resultiert. Das so zunächst hergestellte NCO-funktionelle Prepolymer wird gegebenenfalls mit Lösemittel versetzt und dann ein Teil der verbleibenden NCO-Gruppen mit Komponente e) zur Reaktion gebracht. Diese Umsetzung erfolgt vorzugsweise bei Temperaturen von 30 bis 110, ganz besonders bevorzugt bei 30 bis 80°C. Die übrigen NCO-Gruppen werden entweder vor dem Dispergieren, dann in acetonischer Lösung, oder während bzw. nach dem Dispergieren mit einer aminofunktionellen Komponente c) und/oder einer amino- bzw. hydroxyaminofunktionellen Komponente e) derart umsetzt, dass bis 4,0 Gew.-% bezogen auf Feststoff des Polymeren an überschüssigen Amino- und/oder Hydroxylgruppen vorhanden sind.

Abschließend wird gegebenenfalls das Lösemittel destillativ entfernt. Die hydrophilen Komponente c) wird dabei in solchen Mengen eingesetzt, das stabile Dispersionen entstehen, wobei eine nichtionisch-hydrophile Komponente c) immer mit eingesetzt wird. Werden hydrophile Komponenten in das Prepolymer eingebaut, so werden bevorzugt hydroxyfunktionelle ionische und/oder nichtionische Hydrophilierungsmittel eingesetzt. Die Verwendung aminofunktioneller Hydrophilierungsmittel erfolgt bevorzugt in Gegenwart eines Lösungsmittels und im Anschluss an die Prepolymerherstellung, z.B. im Kettenverlängerungsschritt vor, während oder nach der Dispergierung.

In einer Verfahrensvariante erfolgt zunächst die Umsetzung der Komponenten a) und b), gegebenenfalls unter Mitverwendung von c) und/oder einer hydroxyfunktionellen Komponente d) in ein- oder mehrstufiger Form. Die Reaktion kann in Substanz oder in organischen Lösemitteln, dann vorzugsweise in Aceton, durchgeführt werden. Dabei wird das Äquivalentverhältnis der OH-funktionellen Komponenten a) und gegebenenfalls c) und/oder d) zur NCO-funktionellen Komponente b) so gewählt, dass ein NCO-Überschuss von 20 bis 200, vorzugsweise von 30 bis 150 % resultiert. Das so zunächst hergestellte NCO-funktionelle Prepolymer wird gegebenenfalls mit Lösemittel versetzt und dann ein Teil der verbleibenden NCO-Gruppen mit Komponente e) zur Reaktion gebracht. Diese Umsetzung erfolgt vorzugsweise bei Temperaturen von 30 bis 110, ganz besonders bevorzugt bei 30 bis 80°C. Die übrigen NCO-Gruppen werden entweder vor dem Dispergieren, dann in acetonischer Lösung, oder während bzw. nach dem Dispergieren mit einer aminofunktionellen Komponente c) und/oder einer amino- bzw. hydroxyaminofunktionellen Komponente e) umsetzt, so dass gegebenenfalls überschüssige Amino- und/oder Hydroxylgruppen in einer Menge bis 4,0 Gew.-% bezogen auf Festtstoff des Polymeren vorhanden sind. Die Zugabe der reaktiven Komponente F) in einer Menge bis 10, vorzugsweise bis 6 Gew.-% bezogen auf Feststoffgehalt der Dispersion erfolgt zu einem beliebigen Zeitpunkt der Herstellung, jedoch erst dann, wenn keine freien NCO-Gruppen mehr vorhanden sind.

Abschließend wird gegebenenfalls das Lösemittel destillativ entfernt. Die hydrophilen Komponente c) wird dabei in solchen Mengen eingesetzt, das stabile Dispersionen entstehen, wobei eine nichtionisch-hydrophile Komponente c) immer mit eingesetzt wird. Werden hydrophile Komponenten in das Prepolymer eingebaut, so werden bevorzugt hydroxyfunktionelle ionische und/oder nichtionische Hydrophilierungsmittel eingesetzt.

Die Verwendung aminofunktioneller Hydrophilierungsmittel erfolgt bevorzugt in Gegenwart eines Lösungsmittels und im Anschluss an die Prepolymerherstellung, z.B. im Kettenverlängerungsschritt vor, während oder nach der Dispergierung.

Die Umsetzung der Komponenten kann unter Zusatz von Katalysatoren wie z.B. Dibutylzinndilaurat, Zinn-2-octoat, Dibutylzinnoxid oder Diazabicyclononan durchgeführt werden.

Zur Überführung der Säuregruppen in Salzgruppen können z.B.Amine wie Triethylamin, N-Methylmorpholin, Diisopropylamin, Hydroxyamine wie Diethanolamin, Triethanolamin, Düspropanolamin, Aminomethylpropanol, Kalium- oder Natriumhydroxid, Ammoniak und Di- bzw. Polyamine wie Hexamethylendiamin, Isophorondiamin, Dimethylethylendiamin, 1,4-Cyclohexandiamin, Trimethylhexandiamin, Dimethylhexandiamin, Jeffamine® (Texaco) wie z.B. 3,3'-[1,4-Butandiyl-bis(oxy)]bis-1-propanamin, 4,4'-Methylen-bis-(2,6-diethylcyclohexanamin), 4,4'-Methylen-bis-(2-methylcyclohexanamin), 4,4'-Methylen-bis-cyclohexanamin eingesetzt werden. Dabei kann die oben beschriebene Komponente F) mit ihren freien primären und/oder sekundären Aminogruppen auch die Funktion eines Neutralisationsmittels für eingebaute Säuregruppen übernehmen. Bei einer gemischten Hydrophilierung ist dies bevorzugt.

Die Neutralisationsgrade liegen im allgemeinen zwischen 40 und 120 %.

Nach dem Dispergieren in/durch Wasser wird solange gerührt, bis sämtliche NCO-Gruppen durch NCO-Wasserreaktion und/oder Kettenverlängerungsreaktion mit Komponente b) und/oder d) abreagiert haben. Ebenfalls möglich ist eine vollständige Umsetzung aller NCO-Gruppen mit den oben genannten OH- bzw. NH-funktionellen Komponenten vor dem Dispergieren in/mit Wasser.

Die zur Herstellung der Dispersion gegebenfalls eingesetzten Lösemittel können teilweise bzw. vorzugsweise ganz aus der Dispersion durch Destillation abgetrennt werden. Besonders bevorzugt enthalten die Dispersionen weniger als 2 Gew.-% flüchtige Löse- und Neutralisationsmittel. Bevorzugte Lösemittel Aceton und N-Methylpyrrolidon.

Gegebenenfalls können den Polymeren vor, während oder nach dem Dispergieren auch Hilfs- und Zusatzmittel, wie Antiabsetzmittel, Entschäumer, Verdicker, Emulgatoren, Katalysatoren, Verlaufshilfsmittel, Haftvermittler, Biozide, Antistatika, Lichtschutzmittel, Gleitmittel, Thermostabilisatoren usw.aber auch spezielle oligomere bzw polymere Verbindungen ohne hydrophile Gruppen zugesetzt werden.

Die erfindungsgemäßen Dispersionen weisen mittlere Teilchendurchmesser (bestimmt z.B. durch Laserkorrelationsspektoskopie) von 20 bis 900 , vorzugsweise von 50 bis 400 nm auf.

Die Feststoffgehalte der Dispersionen betragen bei Viskositäten von 10 bis 150 Sekunden Auslaufzeit (DIN-4-Becher, 23°C) mindestens 30, vorzugsweise mindestens 35 %. Die pH-Werte liegen zwischen vorzugsweise 5,0 und 11,0.

Die erfindungsgemäßen selbstvernetzenden Dispersionen eignen sich besonders zur Verwendung in oder als Schlichten, vorzugsweise Glasfaserschlichten. Die Dispersionen können dabei als alleiniges Bindemittel oder zusammen mit anderen Polymeren wie z.B. Polyurethandispersionen, Polyacrylatdispersionen, Polyesterdispersionen, Polyetherdispersionen, Polyepoxiddispersionen, Polyvinylester- bzw. Polyvinyletherdispersionen, Polystyrol- bzw. Polyacrylnitrildispersionen, blockierten Polyisocyanaten, blockierten Polyisocyanatdispersionen, Aminovernetzerharzen wie z.B. Melaminharzen verwendet werden.

Die erfindungsgemäßen selbstvernetzenden Dispersionen bzw. die damit hergestellten Schlichten können die üblichen Hilfs- und Zusatzmittel enthalten, wie z.B. Entschäumungsmittel, Verdickungsmittel, Verlaufshilfsmittel, Dispergierhilfsmittel, Katalysatoren, Hautverhinderungsmittel, Antiabsetzmittel, Emulgatoren, Biozide, Haftvermittler, z.B. auf Basis der bekannten nieder- bzw. höhermolekularen Silane, Gleitmittel, Netzmittel, Antistatika.

Die Schlichten können über beliebige Methoden appliziert werden, beispielsweise mit Hilfe geeigneter Vorrichtungen wie z.B. Sprüh- oder Walzapplikatoren. Sie können auf die mit hoher Geschwindigkeit aus Spinndüsen gezogenen Glasfilamente sofort nach deren Erstarren, d.h. noch vor dem Aufwickeln aufgetragen werden. Es ist auch möglich, die Fasern im Anschluss an den Spinnprozess in einem Tauchbad zu schlichten. Die beschlichteten Glasfasern können entweder nass oder trocken beispielsweise zu Schnittglas weiterverarbeitet werden. Die Trocknung des End- oder Zwischenproduktes findet bei Temperaturen von 100 bis 200°C statt. Unter Trocknung ist dabei nicht alleine die Entfernung von anderen flüchtigen Bestandteilen zu verstehen, sondern z.B. auch das Festwerden der Schlichtebestandteile.Der Anteil der Schlichte beträgt, bezogen auf die beschlichteten Glasfasern 0,1 bis 4 %, vorzugsweise 0,2 bis 2 Gew.-%.

Als Matrixpolymere können themoplastische und auch duromere Polymere verwendet werden.

Die erhaltenen erfindungsgemäßen Dispersionen eignen sich weiterhin für alle Einsatzgebiete, in denen lösemittelhaltige, lösemittelfreie oder andersartige wässrige Anstrich- und Beschichtungssysteme mit einem erhöhten Eigenschaftsprofil Verwendung finden, z.B. Beschichtung mineralischer Untergründe, Lackierung und Versiegelung von Holz und Holzwerkstoffen, Lackierung und Beschichtung metallischer Oberflächen, Lackieren und Beschichten von Kunststoffen sowie die Beschichtung von Textilien und Leder. Die erfindungsgemäßen Dispersionen können dabei als Grundierung, Haftstrich, Haftprimer, Füller, Decklack, Einschichtlack, Deckstrich oder Finish in Form von Klarlacken bzw. klaren Beschichtungen oder auch in pigmentierter Form eingesetzt werden.

### Beispiele:

### Beispiel 1

In einem 6-1-Reaktionsgefäß mit Rühr-, Kühl- und Heizvorrichtung werden 1000 g eines difunktionellen Polypropylenglykols mit dem Molgewicht 1000 g/Mol, 152 g Polyether LB25 (Bayer AG, monofunktioneller Polyether auf Ethylenoxid-/Propylenoxidbasis, Molgewicht 2245 g/Mol), 69,4 g eines Natrium-Sulphonat-Diols des Molekulargewichts 432 g/Mol und 107 g Trimethylolpropan eingewogen, bei 70°C aufgeschmolzen und dann mit 577 g Isophorondiisocyanat und 269 g Hexamethylendiisocyanat solange umgesetzt, bis der theoretische NCO-Wert erreicht worden ist. Das NCO-funktionelle Polyurethan-Prepolymer wird dann mit 600 g Aceton verdünnt und mit einer 40%-igen Lösung in Aceton von 73 g Dimethylpyrazol, 51 g Hydrazin und 47 g N-Methylethanolamin umgesetzt. 30 Minuten nach Zugabe der Lösung wird durch Zugabe von Wasser eine selbstvemetzende Dispersion erhalten, die nach dem Abdestillieren des Acetons einen Feststoffgehalt von 40 % aufweist, und sowohl blockierte NCO-Gruppen als auch Hydroxylgruppen an das Polymer gebunden enthält.

### Beispiel 2

In einem 6-1-Reaktionsgefäß mit Rühr-, Kühl- und Heizvorrichtung werden 1600 g eines difunktionellen Tetrahydrofuranpolyethers mit dem Molgewicht 2000 g/Mol, 800 g eines Tetra-hydrofuranpolyethers mit dem Molekulargewicht 1000, 224 g Polyether LB25 (Bayer AG, monofunktioneller Polyether auf Ethylenoxid-/Propylenoxidbasis, Molgewicht 2245 g/Mol), 270 g Butandiol und 302 g eines Natrium-Sulphonat-Diols des Molekulargewichts 432 g/Mol eingewogen, bei 70°C homogenisiert, mit 1332 g Isophorondiisocyanat und 655 g Hexamethylendiisocyanat versetzt und bei 100°C solange umgesetzt, bis der theoretische NCO-Wert erreicht worden ist. Das NCO-funktionelle Polyurethan-Prepolymer wird bei 75°C mit 78 g Butanonoxim (gelöst in 55 g N-Methylpyrolidon) solange umgesetzt, bis der theoretische NCO-Wert erreicht ist. Dann wird in 8000 g auf 45°C erwärmtem Wasser in 10 Minuten dispergiert und anschließend eine Mischung aus 168 g Ethylendiamin, 22g Hydrazin, 24 g Ethanolamin und 200 g Wasser in 5 Minuten zugegeben. Nach 3 Stunden Rühren bei 45°C sind keine freien NCO-Gruppen mehr nachweisbar, dann werden 51 g Isophorondiamin zugegeben. Man erhält eine selbstvernetzende Dispersion mit einen Feststoffgehalt von 40 %, die blockierte NCO-Gruppen und freie Hydroxylgruppen an das Polymer gebunden, sowie ein reaktives Diamin enthält.

Unter Verwendung der erfindungsgemäßen Dispersionen 1 und 2), den üblichen Hilfsmitteln, u.a. einem Gleitmittel und 3-Aminopropyltriethoxysilan als Haftvermittler (10 % bezogen auf die Menge eingesetzter Dispersion), wurden in üblicher und bekannter Weise Glasfasern hergestellt, geschlichtet, geschnitten und getrocknet. Die Glasfasern wurden zur Verstärkung in Polyamid 6,6 eincompoundiert.

Die Verarbeitungseigenschaften der Schlichten auf Basis der erfindungsgemäßen Dispersionen waren sehr gut. Es traten keinerlei Probleme mit der Bildung von Stippen oder Ausfällungen während der Anwendung auf, auch die Lagerstabilität war ausgezeichnet. Das Schüttvolumen der beschichteten und zerkleinerten Glasfasern wurde als relativ niedrig, und damit als gut bezeichnet. Der Schlichtegehalt lag bei 1,2 bis 1,6 %.

Die mechanischen Werte der daraus hergestellten Prüfkörper lagen auf hohem Niveau. Die Zugfestigkeiten (DIN 53455) lagen im Bereich von 190 bis 201 MPa, die Biegefestigkeiten (DIN 53457) lagen im Bereich von 280 bis 305 MPa, Die Schlagzähigkeiten (DIN ISO 180) lagen zwischen 61,5 und 65 KJ/m².

Die Prüfkörper wurden einem Hydrolysetest bei 110°C in einer Wasser/Ethylenglykol/ Propylenglykol-Mischung unterzogen. Im Abstand von 2 Wochen wurde die Biegefestigkeit überprüft. Nach 2 Wochen betrug die Biegefestigkeit im Mittel noch ca. 145 Mpa, nach 4 Wochen im Mittel noch ca. 135 Mpa und nach 6 Wochen noch etwa 125 Mpa. Dies Werte sind als gut zu beurteilen.

## Patentansprüche

1. Selbstvernetzende Dispersionen auf Basis von Polyurethanen, Polyurethan-Polyharnstoffen bzw. Polyharnstoffen, die an das Polymer gebundene blockierte Isocyanatgruppen und zusätzlich an das Polymer gebundene, reaktive Hydroxyl- bzw. Aminogruppen enthalten und die bei Raumtemperatur bis 50°C lagerstabil sind und bei 90 bis 280°C unter Vernetzung abreagieren, und die in dispergierter bzw. gelöster Form Umsetzungsprodukte aus
a) mindestens einer Polyolkomponente,
b) mindestens einer Di-, Tri- und/oder Polyisocyanatkomponente,
c) mindestens einer hydrophilen, nichtionischen bzw. (potentiell) ionischen Aufbaukompnente, bestehend aus Verbindungen mit mindestens einer gegenüber Isocyanatgruppen reaktiven Gruppe und mindestens einer hydrophilen Polyetherkette, wobei die Polyetherketten dieser Verbindungen zu 40 bis 95 % aus eingebauten Ethylenoxideinheiten und 5 bis 60 % eingebauten Propylenoxideinheiten bestehen und ein Molekulargewicht von 300 bis 6 000 aufweisen und aus Verbindungen mit mindestens einer, gegebenenfalls mindestens teilweise neutralisiert vorliegenden, zur Salzbildung fähigen Gruppe und mindestens einer gegenüber Isocyanatgruppen reaktiven Gruppe,
d) mindestens einer von a) bis c) verschiedenen Aufbaukomponente des Molekulargewichtsbereiches 32 bis 500 mit mindestens einer gegenüber Isocyanatgruppen reaktiven Gruppe und
e) mindestens eines monofunktionellen Blockierungsmittels, sind, wobei c) in solcher Menge eingesetzt wird, dass eine stabile Dispersion entsteht, wobei die Komponente d) derart eingesetzt wird, dass die resultierende Dispersion neben blockierten Isocyanatgruppen reaktive, freie Hydroxyl- und/oder Aminogruppen enthält, wobei der Anteil an reaktiven Hydroxyl- bzw. Aminogruppen aus d) nicht 0 sein kann.

2. Selbstvernetzende Dispersionen gemäß Anspruch 1, **dadurch gekennzeichnet, dass** die Dispersion neben blockierten Isocyanatgruppen sowohl aminofunktionelle Komponenten F), bestehend aus mindestens einem reaktiven Diamin, Polyamin und/oder Hydroxyamin, als auch in das Polymer eingebaute Hydroxyl- und/oder Aminogruppen als reaktive Gruppen tragende Komponente enthält.

3. Selbstvernetzende Dispersion gemäß Anspruch 1, **dadurch gekennzeichnet, dass** das in dispergierter bzw. gelöster Form vorliegende Umsetzungsprodukt aus
a) 30 bis 90 Gew.-% mindestens einer Polyolkomponente des Hydroxylzahlbereiches 5 bis 350,
b) 10 bis 50 Gew.-% mindestens einer Di-, Tri- und/oder Polyisocyanatkomponente,
c) 1 bis 20 Gew.-% mindestens einer hydrophilen, nichtionischen bzw. (potentiell) ionischen Aufbaukomponente, bestehend aus Verbindungen mit mindestens einer gegenüber Isocyanatgruppen reaktiven Gruppe und mindestens einer hydrophilen Polyetherkette und aus Verbindungen mit mindestens einer, gegebenenfalls mindestens teilweise neutralisiert vorliegenden, zur Salzbildung fähigen Gruppe und mindestens einer gegenüber Isocyanat-gruppen reaktiven Gruppe,
d) 1 bis 20 Gew.-% mindestens einer von a) bis c) verschiedenen Aufbaukomponente des Molekulargewichtsbereiches 32 bis 500 mit mindestens einer gegenüber Isocyanatgruppen reaktiven Gruppe,
e) 0,2 bis 7,5 Gew.-% mindestens eines monofunktionellen Blockierungsmittels,
wobei c) in solcher Menge eingesetzt wird, dass eine stabile Dispersion entsteht, wobei entweder eine Komponente d) derart eingesetzt wird, dass die resultierende Dispersion neben blockierten Isocyanatgruppen reaktive, freie Hydroxyl- und/oder Aminogruppen in Mengen von 0 bis 4 Gew.-% bezogen auf den Feststoffgehalt der Dispersion enthält und wobei der Anteil an reaktiven Hydroxyl- bzw. Aminogruppen aus d) nicht 0 sein kann, besteht.

4. Selbstvernetzende Dispersion gemäß Anspruch 1, **dadurch gekennzeichnet, dass** das in dispergierter bzw. gelöster Form vorliegende Umsetzungsprodukt aus
a) 35 bis 75 Gew.-% mindestens einer Polyolkomponente des Hydroxylzahlbereiches 5 bis 350,
b) 15 bis 40 Gew.-% mindestens einer Diisocyanatkomponente,
c) 2,5 bis 15 Gew.-% mindestens einer hydrophilen, nichtionischen Verbindung mit einer gegenüber Isocyanatgruppen reaktiven Gruppe und einer hydrophilen Polyetherkette, sowie einer (potentiell) anionischen Verbindung, mit einer, gegebenenfalls mindestens teilweise neutralisiert vorliegenden, zur Salzbildung fähigen Gruppe und mindestens einer gegenüber Isocyanatgruppen reaktiven Gruppe,
d) 1 bis 11 Gew.-% mindestens einer von a) bis c) verschiedenen Aufbaukomponenten des Molekulargewichtsbereiches 32 bis 500 mit mindestens einer gegenüber Isocyanatgruppen reaktiven Gruppe und
e) 0,2 bis 6 Gew.-% Blockierungsmittel,
wobei die Summe aus a) bis e) 100 % beträgt, wobei c)in solcher Menge eingesetzt wird, dass eine stabile Dispersion entsteht und wobei eine Komponente d) derart eingesetzt wird, dass die resultierende Dispersion neben blockierten Isocyanatgruppen reaktive, freie Hydroxyl- und/oder Aminogruppen in Mengen von 0 bis 2,5 Gew.-% bezogen auf den Feststoffgehalt der Dispersion, wobei der Anteil an reaktiven Hydroxyl- bzw. Aminogruppen aus d) nicht 0 sein kann, besteht.

5. Selbstvernetzende Dispersion gemäß den Anspruch 1, **dadurch gekennzeichnet, dass** das in dispergierter bzw. gelöster Form vorliegende Umsetzungsprodukt enthalten ist aus
a) 37 bis 49 Gew.-% mindestens einer Polyolkomponente des Hydroxylzahlbereiches 8 bis 200,
b) 15 bis 40 Gew.-% Isophorondiisocyanat und/oder Hexamethylendiisocyanat,
c) 2,5 bis 15 Gew.-% mindestens einer hydrophilen, nichtionischen Verbindung mit einer gegenüber Isocyanatruppen reaktiven Gruppe und einer hydrophilen Polyetherkette, sowie einer (potentiell) anionischen Verbindung, mit einer, gegebenenfalls mindestens teilweineutralisiert vorliegenden, zur Salzbildung fähigen Gruppe und mindestens einer gegenüber Isocyanatgruppen reaktiven Gruppe,
d) 2 bis 8,5 Gew.-% mindestens zwei von a) bis c) verschiedenen Aufbaukomponenten des Molekulargewichtsbereiches 32 bis 500 mit mindestens einer gegenüber Isocyanatgruppen reaktiven Gruppe und
e) 0,2 bis 6 Gew.-% Blockierungsmittel,
wobei die Summe aus a) bis e) 100 % beträgt, wobei c)in solcher Menge eingesetzt wird, dass eine stabile Dispersion entsteht und wobei eine Komponente d) derart eingesetzt wird, dass die resultierende Dispersion neben blockierten Isocyanatgruppen reaktive, freie Hydroxyl- und/oder Aminogruppen in Mengen von 0 bis 2,5 Gew.-% bezogen auf den Feststoffgehalt der Dispersion, wobei der Anteil an reaktiven Hydroxyl- bzw. Aminogruppen aus d) nicht 0 sein kann, besteht.

6. Reaktive Dispersion gemäß den Ansprüchen 1 bis 5, **dadurch gekennzeichnet, dass** Komponente c) aus nichtionischen hydrophilen Verbindungen in Mengen von 2 bis 8 Gew.-%, wobei der Ethylenoxidgehalt dabei nicht mehr als 4,5 Gew.-% beträgt und anionischen Verbindungen in Mengen von 0,5 bis 7 Gew.-%, besteht.

7. Reaktive Dispersion gemäß den Ansprüchen 1 bis 5, **dadurch gekennzeichnet, dass** Komponente a) besteht aus Polycarbonatdiolen, Polytetrahydrofurandiolen und/oder di- bzw. trifunktionellen Polypropylenglykolen des Molekulargewichtes 300 bis 3500, wobei maximal 8 % trifunktioneller Polyole bezogen auf den Gesamtfeststoffgehalt enthalten sind.

8. Reaktive Dispersion gemäß den Ansprüchen 1 bis 5, **dadurch gekennzeichnet, dass** als Komponente b) ausschließlich aliphatische und/oder cycloalphatische Diisocyanate des Molekulargewichts 168 bis 262 eingesetzt enthalten sind.

9. Reaktive Dispersion gemäß den Ansprüchen 1 bis 5, **dadurch gekennzeichnet, dass** als eine Komponente d) 0 bis 3 Gew.-% eines monoaminofunktionellen Alkoxysilans enthalten sind.

10. Reaktive Dispersion gemäß den Ansprüchen 1 bis 5, **dadurch gekennzeichnet, dass** als Komponente e) eine Mischung von unterschiedlich reaktiven Blockierungsmitteln enthalten ist.

11. Reaktive Dispersion gemäß Anspruch 1, **dadurch gekennzeichnet, dass** neben blockierten Isocyanatgruppen ausschließlich ans Polymer durch Verwendung mindestens eines Hydroxyamines als Komponente d) gebundene Hydroxylgruppen vorhanden sind.

12. Reaktive Dispersion gemäß Anspruch 2, **dadurch gekennzeichnet, dass** neben den blockierten Isocyanatgruppen 1 bis 6 Gew-%, bezogen auf Feststoffgehalt der Dispersion einer Komponente F), bestehend aus mindestens einem reaktiven aliphatischen und/oder cycloaliphatischen Diamin, enthalten sind.

13. Reaktive Dispersion gemäß den Ansprüchen 1 bis 12, **dadurch gekennzeichnet, dass** das Verhältnis aller blockierten Isocyanatgruppen zu allen freien, reaktiven Hydroxyl- und/oder Aminogruppen 1,00 : 0,35 bis 1,00 : 0,85 beträgt.

14. Reaktive Dispersion gemäß den Ansprüchen 1 bis 6, **dadurch gekennzeichnet, dass** als anionische Hydrophilierungskomponente ausschließlich Sulphonatgruppen enthaltende Verbindungen enthalten sind.

15. Reaktive Dispersion gemäß den Ansprüchen 1 bis 6, **dadurch gekennzeichnet, dass** anionische Hydrophilierungskomponenten zu mindestens 75 % aus dem Umsetzungsprodukt aus äquivalenten Mengen Isophorondiamin und Acrylsäure bestehen.

16. Reaktive Dispersion gemäß den Ansprüchen 1 bis 5, **dadurch gekennzeichnet, dass** 0,1 bis 1,2 Gew.-% Hydrazin bzw. eine äquivalente Menge Hydrazinhydrat als Kettenverlängerungsmittel d) eingebaut sind.

17. Reaktive Dispersion gemäß Anspruch 2, **dadurch gekennzeichnet, dass** die Komponente F) als Neutralisationsmittel für ans Polymer gebundene Säuregruppen fungiert.

18. Verfahren zur Herstellung selbstvernetzender Dispersionen gemäß Anspruch 1, **dadurch gekennzeichnet, dass** aus mindestens einem Polyol a), mindestens einer Isocyanatkomponente b) gegebenenfalls unter Mitverwendung hydrophilierender Komponenten c) bzw. von Komponenten d) zunächst ein Isocyanat-funktionelles Prepolymer hergestellt wird, dann ein Teil der verbleibenden Isocyanatgruppen mit mindestens einem Blockierungsmittel e) umgesetzt wird und dann die übrigen Isocyanatgruppen entweder vor, während oder nach dem Dispergieren gegebenenfalls mit hydrophilierenden Komponenten c) und/oder Komponenten d) umgesetzt werden, anschließend gegebenenfalls das vor, während oder nach der Prepolymerherstellung gegebenenfalls zugesetzte Lösemittel destillativ entfernt wird, wobei die hydrophilierende(n) Komponente(n) c) in solcher Menge eingesetzt werden, dass eine stabile Dispersion entsteht und wobei eine Komponente d) so eingesetzt wird, dass in der selbstvernetzenden Dispersion neben blockierten Isocyanatgruppen freie, reaktive Hydroxyl- und/oder Aminogruppen an das Polymer gebunden sind.

19. Verfahren zur Herstellung selbstvernetzender Dispersionen gemäß Anspruch 2, **dadurch gekennzeichnet, dass** aus mindestens einem Polyol a), mindestens einer Isocyanatkomponente b) gegebenenfalls unter Mitverwendung hydrophilierender Komponenten c) bzw. von Komponenten d) zunächst ein Isocyanat-funktionelles Prepolymer hergestellt wird, dann ein Teil der verbleibenden Isocyanatgruppen mit mindestens einem Blockierungsmittel e) umgesetzt wird und dann die übrigen Isocyanatgruppen entweder vor, während oder nach dem Dispergieren gegebenenfalls mit hydrophilierenden Komponenten c) und/oder Komponenten d) umgesetzt werden und wobei eine reaktive Komponente F) vor, während oder nach dem Dispergieren dann zugesetzt wird, wenn keine freien Isocyanatgruppen mehr vorhanden sind und anschließend das vor, während oder nach der Prepolymerherstellung gegebenenfalls zugesetzte Lösemittel destillativ entfernt wird, so dass in der selbstvernetzenden Dispersion neben blockierten Isocyanatgruppen gegebenenfalls freie, reaktive Hydroxyl- und/oder Aminogruppen an das Polymer gebunden sind und in Form von Diaminen, Polyaminen bzw. Hydroxyaminen reaktive Amino- und/oder Hydroxylgruppen enthalten sind.

20. Verwendung selbstvernetzender Dispersionen gemäß den Ansprüchen 1 und 2 in oder als Lack oder Beschichtung.

21. Verwendung selbstvernetzender Dispersionen gemäß den Ansprüchen 1 und 2 in oder als Schlichte bzw. Glasfaserschlichte.

22. Glasfaserschlichten, enthaltend selbstvernetzende Dispersionen gemäß den Ansprüchen 1 und 2.

## Claims

1. Self-crosslinking dispersions based on polyurethanes, polyurethane-polyureas and/or polyureas, which comprise blocked isocyanate groups attached to the polymer and also reactive hydroxyl and/or amino groups attached to the polymer and which are stable on storage at room temperature up to 50°C and react at from 90 to 280°C with crosslinking, and which in dispersed or dissolved form are reaction products of
a) at least one polyol component,
b) at least one di-, tri- and/or polyisocyanate component,
c) at least one hydrophilic, nonionic or (potentially) ionic synthesis component composed of compounds containing at least one group which is reactive towards isocyanate groups and at least one hydrophilic polyether chain, from 40 to 95% of the polyether chains of these compounds being composed of incorporated ethylene oxide units and from 5 to 60% being composed of incorporated propylene oxide units and said polyether chains having a molecular weight of from 300 to 6000, and of compounds containing at least one group capable of salt formation, which is present optionally in at least partly neutralized form, and at least one group which is reactive towards isocyanate groups,
d) at least one synthesis component other than a) to c) with a molecular weight in the range from 32 to 500, containing at least one group which is reactive towards isocyanate groups, and
e) at least one monofunctional blocking agent,
c) being used in an amount such that a stable dispersion is formed, component d) being used in such a way that the resulting dispersion, besides blocked isocyanate groups, contains reactive, free hydroxyl and/or amino groups, it being not possible for the fraction of reactive hydroxyl and/or amino groups from d) to be 0.

2. Self-crosslinking dispersions according to Claim 1, **characterized in that** besides blocked isocyanate groups the dispersion comprises aminofunctional components F) composed of at least one reactive diamine, polyamine and/or hydroxyl amine and also hydroxyl and/or amino groups incorporated into the polymer, as a component carrying reactive groups.

3. Self-crosslinking dispersion according to Claim 1, **characterized in that** the reaction product present in dispersed or dissolved form is composed of
a) from 30 to 90% by weight of at least one polyol component with a hydroxyl number in the range from 5 to 350,
b) from 10 to 50% by weight of at least one di-, tri- and/or polyisocyanate component,
c) from 1 to 20% by weight of at least one hydrophilic, nonionic or (potentially) ionic synthesis component composed of compounds containing at least one group which is reactive towards isocyanate groups and at least one hydrophilic polyether chain and of compounds containing at least one group capable of salt formation, which is present optionally in at least partly neutralized form, and at least one group which is reactive towards isocyanate groups,
d) from 1 to 20% by weight of at least one synthesis component other than a) to c) with a molecular weight in the range from 32 to 500, containing at least one group which is reactive towards isocyanate groups, and
e) from 0.2 to 7.5% by weight of at least one monofunctional blocking agent,
c) being used in an amount such that a stable dispersion is formed, one component d) being used in such a way that the resulting dispersion, besides blocked isocyanate groups, contains reactive, free hydroxyl and/or
amino groups in amounts of from 0 to 4% by weight based on the solids content of the dispersion, it being not possible for the fraction of reactive hydroxyl and/or amino groups from d) to be 0.

4. Self-crosslinking dispersion according to Claim 1, **characterized in that** the reaction product present in dispersed or dissolved form is contained is composed of
a) from 35 to 75% by weight of at least one polyol component with a hydroxyl number in the range from 5 to 350,
b) from 15 to 40% by weight of at least one diisocyanate component,
c) from 2.5 to 15% by weight of at least one hydrophilic, nonionic compound containing a group which is reactive towards isocyanate groups and a hydrophilic polyether chain, and also one (potentially) anionic compound containing a group capable of salt formation, which optionally is in at least partly neutralized form, and at least one group which is reactive towards isocyanate groups,
d) from 1 to 11% by weight of at least one synthesis component other than a) to c) with a molecular weight in the range from 32 to 500, containing at least one group which is reactive towards isocyanate groups, and
e) from 0.2 to 6% by weight of blocking agent(s),
the sum of a) to e) being 100%, c) being used in an amount such that a stable dispersion is formed, and one component d) being used in such a way that the resulting dispersion, besides blocked isocyanate groups, contains reactive, free hydroxyl and/or amino groups in amounts of from 0 to 2.5% by weight based on the solids content of the dispersion, it being not possible for the fraction of reactive hydroxyl and/or amino groups from d) to be 0.

5. Self-crosslinking dispersion according to Claim 1, **characterized in that** the reaction product present in dispersed or dissolved form is composed of
a) from 37 to 49% by weight of at least one polyol component with a hydroxyl number in the range from 8 to 200,
b) from 15 to 40% by weight of isophorone diisocyanate and/or hexamethylene diisocyanate,
c) from 2.5 to 15% by weight of at least one hydrophilic, nonionic compound containing a group which is reactive towards isocyanate groups and a hydrophilic polyether chain, and also one (potentially) anionic compound containing a group capable of salt formation, which optionally is in at least part-neutralized form, and at least one group which is reactive towards isocyanate groups,
d) from 2 to 8.5% by weight of at least two synthesis components other than a) to c) with a molecular weight in the range from 32 to 500, containing at least one group which is reactive towards isocyanate groups, and
e) from 0.2 to 6% by weight of blocking agent(s),
the sum of a) to e) being 100%, c) being used in an amount such that a stable dispersion is formed, and one component d) being used in such a way that the resulting dispersion, besides blocked isocyanate groups, contains reactive, free hydroxyl and/or amino groups in amounts of from 0 to 2.5% by weight based on the solids content of the dispersion, it being not possible for the fraction of reactive hydroxyl and/or amino groups from d) to be 0.

6. Reactive dispersion according to Claims 1 to 5, **characterized in that** component c) is composed of nonionic hydrophilic compounds in amounts of from 2 to 8% by weight, the ethylene oxide content therein being not more than 4.5% by weight, and anionic compounds in amounts of from 0.5 to 7% by weight.

7. Reactive dispersion according to Claims 1 to 5, **characterized in that** component a) is composed of polycarbonatediols, polytetrahydrofurandiols and/or di- and/or trifunctional polypropylene glycols with a molecular weight of from 300 to 3500, there being not more than 8% trifunctional polyols present based on the total solids content.

8. Reactive dispersion according to Claims 1 to 5, **characterized in that** exclusively aliphatic and/or cycloaliphatic diisocyanates of molecular weight from 168 to 262 are present as component b).

9. Reactive dispersion according to Claims 1 to 5, **characterized in that** from 0 to 3% by weight of a monoamino-functional alkoxysilane are present as one component d).

10. Reactive dispersion according to Claims 1 to 5, **characterized in that** a mixture of differently reactive blocking agents is present as component e).

11. Reactive dispersion according to Claim 1, **characterized in that**, besides blocked isocyanate groups, exclusively hydroxyl groups attached to the polymer through the use of at least one hydroxyl amine as component d) are present.

12. Reactive dispersion according to Claim 2, **characterized in that** besides the blocked isocyanate groups from 1 to 6% by weight, based on solids content of the dispersion, of a component F) composed of at least one reactive aliphatic and/or cycloaliphatic diamine are present.

13. Reactive dispersion according to Claims 1 to 12, **characterized in that** the ratio of all blocked isocyanate groups to all free, reactive hydroxyl and/or amino groups is from 1.00:0.35 to 1.00:0.85.

14. Reactive dispersion according to Claims 1 to 6, **characterized in that** exclusively compounds containing sulphonate groups are present as anionic hydrophilicizing component.

15. Reactive dispersion according to Claims 1 to 6, **characterized in that** anionic hydrophilicizing components are composed to an extent of at least 75% of the reaction product of equivalent amounts of isophoronediamine and acrylic acid.

16. Reactive dispersion according to Claims 1 to 5, **characterized in that** from 0.1 to 1.2% by weight of hydrazine and/or an equivalent amount of hydrazine hydrate have been incorporated as chain extender(s) d).

17. Reactive dispersion according to Claim 2, **characterized in that** component F) acts as a neutralizing agent for acid groups attached to the polymer.

18. Process for preparing self-crosslinking dispersions according to Claim 1, **characterized in that** first an isocyanate-functional prepolymer is prepared from at least one polyol a), at least one isocyanate component b), with the use where appropriate of hydrophilicizing components c) and/or components d), then some of the remaining isocyanate groups are reacted with at least one blocking agent e) and then the remaining isocyanate groups, either before, during or after the dispersing operation, are reacted if desired with hydrophilicizing components c) and/or components d), then, where appropriate, the solvent added where appropriate before, during or after the preparation of the prepolymer is removed by distillation, the hydrophilicizing component(s) c) being used in an amount such that a stable dispersion is formed, and a component d) being used such that in the self-crosslinking dispersion, besides blocked isocyanate groups, free, reactive hydroxyl and/or amino groups are attached to the polymer.

19. Process for preparing self-crosslinking dispersions according to Claim 2, **characterized in that** first an isocyanate-functional prepolymer is prepared from at least one polyol a), at least one isocyanate component b), with the use where appropriate of hydrophilicizing components c) and/or components d), then some of the remaining isocyanate groups are reacted with at least one blocking agent e) and then the remaining isocyanate groups, either before, during or after the dispersing operation, are reacted where appropriate with hydrophilicizing components c) and/or components d), and where a reactive component F) is added before, during or after the dispersing operation when there are no longer free isocyanate groups, and subsequently the solvent added where appropriate before, during or after the preparation of the prepolymer is removed by distillation, so that in the self-crosslinking dispersion, besides blocked isocyanate groups, where appropriate, free, reactive hydroxyl and/or amino groups are attached to the polymer and reactive amino and/or hydroxyl groups are present in the form of diamines, polyamines and/or hydroxy amines.

20. Use of self-crosslinking dispersions according to Claims 1 and 2 in or as coating material or coating.

21. Use of self-crosslinking dispersions according to Claims 1 and 2 in or as a size, including glass fibre size.

22. Glass fibre sizes comprising self-crosslinking dispersions according to Claims 1 and 2.

## Revendications

1. Dispersions autoréticulantes à base de polyuréthanne, de polyuréthanne-polyurée ou de polyurée, qui contiennent des radicaux isocyanate bloqués liés au polymère et en outre, des radicaux hydroxyle et respectivement, amino réactifs, liés au polymère, et qui sont stables de la température ambiante jusqu'à 50°C et réagissent par réticulation de 90 à 280°C, et qui sont, sous forme dispersée ou dissoute, les produits de réaction de :
a) au moins un composant polyol,
b) au moins un composant di-, tri- et/ou polyisocyanate,
c) au moins un composant d'élaboration hydrophile, non ionique ou (potentiellement) ionique, consistant en des composés avec au moins un radical réactif avec les radicaux isocyanate et au moins une chaine polyéther hydrophile, où les chaînes polyéther de ces composés consistent en 40 à 95% d'unités oxyde d'éthylène incorporées et 5 à 60% d'unités oxyde de propylène incorporées et présentent un poids moléculaire allant de 300 à 6000, et en des composés avec au moins un radical capable de former un sel, le cas échéant, au moins partiellement présent sous forme neutralisée et au moins un radical réactif avec les radicaux isocyanate,
d) au moins un composant d'élaboration différent de a) à c), d'intervalle de poids moléculaire allant de 32 à 500, avec au moins un radical réactif avec les radicaux isocyanate, et
e) au moins un agent de blocage monofonctionnel,
où on met en oeuvre c) en des quantités telles qu'il se forme une dispersion stable, où le composant d) est mis en oeuvre de sorte que la dispersion résultante contienne en plus des radicaux isocyanate bloqués, des radicaux hydroxyle et/ou amino réactifs libres, où la fraction de radicaux hydroxyle et respectivement, amino réactifs de d) ne peut pas être nulle.

2. Dispersions autoréticulantes suivant la revendication 1, **caractérisées en ce que** la dispersion contient, en plus des radicaux isocyanate bloqués, non seulement des composants F) aminofonctionnels, consistant en au moins une diamine, polyamine et/ou hydroxyamine réactive, mais également des composants portant comme radicaux réactifs, des radicaux hydroxyle et/ou amino incorporés dans le polymère.

3. Dispersion autoréticulante suivant la revendication 1, **caractérisée en ce qu'**elle consiste en le produit de réaction présent sous forme dispersée ou dissoute, de :
a) 30 à 90% en poids d'au moins un composant polyol d'indice d'hydroxyle allant de 5 à 350,
b) 10 à 50% en poids d'au moins un composant di-, tri- et/ou polyisocyanate,
c) 1 à 20% en poids d'au moins un composant d'élaboration hydrophile, non ionique ou (potentiellement) ionique, consistant en des composés avec au moins un radical réactif avec les radicaux isocyanate et au moins une chaine polyéther hydrophile et en des composés avec au moins un radical capable de former un sel, le cas échéant, au moins partiellement présent sous forme neutralisée et au moins un radical réactif avec les radicaux isocyanate,
d) 1 à 20% en poids d'au moins un composant d'élaboration différent de a) à c), d'intervalle de poids moléculaire allant de 32 à 500, avec au moins un radical réactif avec les radicaux isocyanate, et
e) 0,2 à 7,5% en poids d'au moins un agent de blocage monofonctionnel,
où on met en oeuvre c) en des quantités telles qu'il se forme une dispersion stable, où le composant d) est mis en oeuvre de sorte que la dispersion résultante contienne en plus des radicaux isocyanate bloqués, des radicaux hydroxyle et/ou amino réactifs libres en des quantités allant de 0 à 4% en poids sur base de la teneur en matières solide de la dispersion, et où la fraction de radicaux hydroxyle et respectivement, amino réactifs de d) ne peut pas être nulle.

4. Dispersion autoréticulante suivant la revendication 1, **caractérisée en ce qu'**elle consiste en le produit de réaction présent sous forme dispersée ou dissoute, de :
a) 35 à 75% en poids d'au moins un composant polyol d'indice d'hydroxyle allant de 5 à 350,
b) 15 à 40% en poids d'au moins un composant diisocyanate,
c) 2,5 à 15% en poids d'au moins un composant hydrophile, non ionique avec un radical réactif avec les radicaux isocyanate et une chaine polyéther hydrophile, ainsi qu'un composé (potentiellement) anionique avec un radical capable de former un sel, le cas échéant, au moins partiellement présent sous forme neutralisée et au moins un radical réactif avec les radicaux isocyanate,
d) 1 à 11% en poids d'au moins un composant d'élaboration différent de a) à c), d'intervalle de poids moléculaire allant de 32 à 500, avec au moins un radical réactif avec les radicaux isocyanate, et
e) 0,2 à 6% en poids d'au moins un agent de blocage,
où la somme de a) à e) s'élève à 100%, où on met en oeuvre c) en des quantités telles qu'il se forme une dispersion stable, où un composant d) est mis en oeuvre de sorte que la dispersion résultante contienne en plus des radicaux isocyanate bloqués, des radicaux hydroxyle et/ou amino réactifs libres en des quantités allant de 0 à 2,5% en poids sur base de la teneur en matières solide de la dispersion, et où la fraction de radicaux hydroxyle et respectivement, amino réactifs de d) ne peut pas être nulle.

5. Dispersion autoréticulante suivant la revendication 1, **caractérisée en ce qu'**elle consiste en le produit de réaction présent sous forme dispersée ou dissoute, de :
a) 37 à 49% en poids d'au moins un composant polyol d'indice d'hydroxyle allant de 8 à 200,
b) 15 à 40% en poids d'isophoronediisocyanate et/ou d'hexaméthylènediisocyanate,
c) 2,5 à 15% en poids d'au moins un composant hydrophile, non ionique avec un radical réactif avec les radicaux isocyanate et une chaine polyéther hydrophile, ainsi qu'un composé (potentiellement) anionique avec un radical capable de former un sel, le cas échéant, au moins partiellement présent sous forme neutralisée et au moins un radical réactif avec les radicaux isocyanate,
d) 2 à 8,5% en poids d'au moins un composant d'élaboration différent de a) à c), d'intervalle de poids moléculaire allant de 32 à 500, avec au moins un radical réactif avec les radicaux isocyanate, et
e) 0,2 à 6% en poids d'un agent de blocage,
où la somme de a) à e) s'élève à 100%, où on met en oeuvre c) en des quantités telles qu'il se forme une dispersion stable, où un composant d) est mis en oeuvre de sorte que la dispersion résultante contienne en plus des radicaux isocyanate bloqués, des radicaux hydroxyle et/ou amino réactifs libres en des quantités allant de 0 à 2,5% en poids sur base de la teneur en matières solide de la dispersion, et où la fraction de radicaux hydroxyle et respectivement, amino réactifs de d) ne peut pas être nulle.

6. Dispersion réactive suivant l'une quelconque des revendications 1 à 5, **caractérisée en ce que** le composant c) consiste en des composés hydrophiles non ioniques en des quantités allant de 2 à 8% en poids, où la teneur en oxyde d'éthylène ne s'élève pas à plus de 4,5% en poids et en des composés anioniques en des quantités allant de 0,5 à 7% en poids.

7. Dispersion réactive suivant l'une quelconque des revendications 1 à 5, **caractérisée en ce que** le composant a) consiste en des polycarbonate-diols, des polytétrahydrofuranne-diols et/ou des polypropylèneglycols bi- ou trifonctionnels, de poids moléculaire allant de 300 à 3500, où maximum 8% de polyols trifonctionnels sont présents, sur base de la teneur globale en matière solide.

8. Dispersion réactive suivant l'une quelconque des revendications 1 à 5, **caractérisée en ce que** comme composant b), sont mis en oeuvre des diisocyanates exclusivement aliphatiques et/ou cycloaliphatiques de poids moléculaire allant de 168 à 262.

9. Dispersion réactive suivant l'une quelconque des revendications 1 à 5, **caractérisée en ce que** comme composant d), sont présents 0 à 3% en poids d'un alcoxysilane monoaminofonctionnel.

10. Dispersion réactive suivant l'une quelconque des revendications 1 à 5, **caractérisée en ce que** comme composant e), est présent un mélange d'agents de blocage réagissant différemment.

11. Dispersion réactive suivant la revendication 1, **caractérisée en ce qu'**en plus des radicaux isocyanate bloqués, les radicaux hydroxyle liés dans le polymère, sont présents exclusivement par l'utilisation d'au moins une hydroxyamine comme composant d).

12. Dispersion réactive suivant la revendication 2, **caractérisée en ce que** en plus des radicaux isocyanate bloqués, sont présents 1 à 6% en poids, sur base de la teneur en matière solide de la dispersion, d'un composant F), consistant en au moins une diamine aliphatique et/ou cycloaliphatique réactive.

13. Dispersion réactive suivant l'une quelconque des revendications 1 à 12, **caractérisée en ce que** le rapport de tous les radicaux isocyanate bloqués à tous les radicaux hydroxyle et/ou amino réactifs libres se situe dans l'intervalle allant de 1,00:0,35 à 1,00:0,85.

14. Dispersion réactive suivant l'une quelconque des revendications 1 à 6, **caractérisée en ce que** sont présents somme composants anioniques d'hydrophilisation, exclusivement des composés contenant des radicaux sulfonate.

15. Dispersion réactive suivant l'une quelconque des revendications 1 à 6, **caractérisée en ce que** les composants anioniques d'hydrophilisation consistent en au moins 75% du produit de réaction de quantités équivalentes d'isophoronediamine et d'acide acrylique.

16. Dispersion réactive suivant l'une quelconque des revendications 1 à 5, **caractérisée en ce qu'**est incorporé 0,1 à 1,2% en poids d'hydrazine ou une quantité équivalent d'hydrate d'hydrazine comme agent d'allongement de chaîne d).

17. Dispersion réactive suivant la revendication 2, **caractérisée en ce que** le composant F) fonctionne comme agent de neutralisation pour les radicaux acide liés au polymère.

18. Procédé de préparation de dispersions autoréticulantes suivant la revendication 1, **caractérisé en ce que** l'on prépare d'abord un prépolymère à fonction isocyanate à partir d'au moins un polyol a), d'au moins un composant isocyanate b), le cas échéant en utilisant un composant d'hydrophilisation c) et respectivement, un composant d), puis une partie des radicaux isocyanate restants sont mis à régir avec au moins un agent de blocage e) et les radicaux isocyanate restants alors sont mis à réagir avant, pendant ou après la dispersion, le cas échéant avec les composants c) d'hydrophilisation et/ou les composants d), ensuite le cas échéant, le solvant le cas échéant ajouté avant, pendant ou après la préparation du prépolymère est éliminé par distillation, où le ou les composants c) d'hydrophilisation sont mis en oeuvre en des quantités telles qu'il se forme une dispersion stable et où le composant d) est mis en oeuvre de sorte que dans la dispersion autoréticulante, en plus des radicaux isocyanate bloqués, sont liés sur le polymère, des radicaux hydroxyle et/ou amino réactifs, libres.

19. Procédé de préparation de dispersions autoréticulantes suivant la revendication 2, **caractérisé en ce que** l'on prépare d'abord un prépolymère à fonction isocyanate à partir d'au moins un polyol a), d'au moins un composant isocyanate b), le cas échéant en utilisant un composant d'hydrophilisation c) et respectivement, un composant d), puis une partie des radicaux isocyanate restants sont mis à régir avec au moins un agent de blocage e) et les radicaux isocyanate restants alors sont mis à réagir avant, pendant ou après la dispersion, le cas échéant avec les composants c) d'hydrophilisation et/ou les composants d), et où un composant réactif F) est ajouté avant, pendant ou après la dispersion, lorsque aucun radical isocyanate libre n'est plus présent, ensuite le cas échéant, le solvant le cas échéant ajouté avant, pendant ou après la préparation du prépolymère est éliminé par distillation, de sorte que dans la dispersion autoréticulante, en plus des radicaux isocyanate bloqués, sont liés sur le polymère, le cas échéant, des radicaux hydroxyle et/ou amino réactifs, libres et où les radicaux amino- et/ou hydroxyles réactifs sont présents sous la forme de diamines, de polyamines ou d'hydroxylamines.

20. Utilisation des dispersions autoréticulantes suivant les revendications 1 et 2, dans ou comme laque ou revêtement.

21. Utilisation des dispersions autoréticulantes suivant les revendications 1 et 2, dans ou comme produit d'ensimage ou d'encollage de fibres de verre.

22. Produits d'encollage de fibres de verre, contenant les dispersions autoréticulantes suivant les revendications 1 et 2.
